# EUROPÄISCHE PATENTANMELDUNG

(11) **EP 0 653 624 A2**
(43) Veröffentlichungstag der Anmeldung: **17.05.1995**
(21) Anmeldenummer: 94117662.0
(22) Anmeldetag: 09.11.1994
(51) Int. Cl.: G01N 21/33

(54) **Verfahren zur online Steuerung und Analytik industrieller synthese- und Färbeverfahren mit der UV/VIS-Spektroskopie und Multikomponentenanalyse**

(30) Priorität: 17.11.1993 DE 4339207
(71) Anmelder: HOECHST AKTIENGESELLSCHAFT, D-65929 Frankfurt am Main (DE)
(72) Erfinder: v. d. Eltz, Andreas, Dr., D-60433 Frankfurt am Main (DE); Russ, Werner Hubert, Dr., D-85439 Flörsheim (DE); Tappe, Horst, Dr., D-63128 Dietzenbach (DE); Buchwald, Dirk, D-65618 Selters (DE)

(57) **Zusammenfassung**

Verfahren zur Steuerung und Optimierung von Prozessen zur Herstellung von Farbstoffen, anderweitig farbiger Substanzen sowie deren Zwischenprodukten oder von Färbungen mit einem oder mehreren Farbstoffen, indem man mit einer Multikomponentenanalyse der UV/VIS-Spektren, gegebenenfalls nach vorheriger Aufbereitung der Proben, die genauen Mengen der an der Herstellung oder Färbung beteiligten Substanzen ermittelt und gegebenenfalls steuert und optimiert.

## Beschreibung

Die vorliegende Erfindung beschreibt ein Verfahren, mit dem es möglich ist, kontinuierlich in laufenden Prozessen die Edukte und/oder Produkte in absoluten Mengen oder prozentual zu erfassen und simultan auf einem Monitor die aktuellen Mengenverhältnisse darzustellen. Bei den zu überwachenden Prozessen handelt es sich um Syntheseansätze von Farbstoffen oder deren Vorprodukte, sowie Färbungen mit einem oder mehreren Farbstoffen gleichzeitig (Trichromiefärbung).

Industrielle Prozesse zur Herstellung von Farbstoffen, optischen Aufhellern und deren Zwischenprodukten führen häufig zu komplexen, schwer charakterisierbaren Reaktionsgemischen, die in ihrer Zusammensetzung mit geringster Abweichung reproduziert werden müssen, um den Qualitätsanforderungen zu genügen. Das ständige Verfolgen des Reaktionsverlaufs mit dem Ziel, bei Abweichungen sofort korrigierend eingreifen zu können, stellt hohe Anforderungen an die Steuerung des Prozesses.

Ferner kann es erforderlich sein, den Endpunkt einer Umsetzung schnell und exakt festzustellen, da sowohl eine zu kurze Reaktionsführung als auch eine zu lange Reaktionsführung abweichende Zusammensetzungen der Reaktionsmasse zur Folge haben kann.

In den letzten Jahren ist man zunehmend bestrebt, Herstellungsverfahren für chemische Verbindungen, insbesondere für Textilveredlungsmittel und Textilausrüstmittel und deren Zwischenprodukte, wie z. B. Farbstoffe, Aufheller und deren Zwischenprodukte, zu automatisieren und zu optimieren, und zwar sowohl was den Herstellungsprozeß anbetrifft, als auch hinsichtlich der Aufarbeitung. Um hier zu befriedigenden und reproduzierbaren Ergebnissen zu gelangen, ist man auf Analysenmethoden angewiesen, die sich durch folgende Kriterien auszeichnen: kurze Analysendauer, hohe Analysenfrequenz, d.h. hoher Informationsgehalt pro Zeiteinheit, möglichst geringe Kosten, Einfachheit, Zuverlässigkeit, Automationsfähigkeit und geringer Platzbedarf. Geräte, die diesen Anforderungen genügen, sind vor allem Sensoren für die Messung physikalischer Parameter, wie z. B. Temperatur, Druck und Verbrauch an Ausgangsverbindungen.

Diese Parameter liefern jedoch keine Information über den jeweiligen Verfahrensstand und Verfahrenszustand (Ausbeute an gewünschtem Produkt, Anteil an Nebenprodukten, Produktqualität) und den jeweiligen Verlauf der chemischen Reaktion. Damit sind Kontrolle und Sicherstellung einer gleichbleibenden Produktqualität, verbunden mit optimaler Ausbeute, nicht gewährleistet. Ferner sind aus den physikalischen Parametern keine Prognosen hinsichtlich Reaktionsende, Produktqualität und Ausbeute möglich. Es ist bisher üblich, die Reaktionsmasse am Ende einer Verfahrensstufe oder erst am Ende des ganzen Verfahrens zu analysieren, damit sind korrigierende Maßnahmen im Verlauf des Verfahrens ausgeschlossen.

Ein Verfahren, das sich hervorragend für meß- und regeltechnische Zwecke eignet, ist die UV/VIS-Spektroskopie. Es ist eine seit langem bekannte Methode, die den Wellenlängenbereich von 200 bis 750 nm umfaßt. Das UV/VIS-Spektrum selbst ist ein Bild der π-Elektronenabsorption einer chemischen Verbindung, die für diese Messung üblicherweise gelöst in einem flüssigen Medium vorliegt. Ein bedeutender Vorteil dieser Spektroskopieart gegenüber anderen Verfahren liegt in ihrer Geschwindigkeit und Einfachheit der Probenbereitung. Dies macht sie bei Meß- und Regeltechniken der IR-Spektroskopie und NMR-Spektroskopie überlegen Chromatographische Methoden wie z. B. Gaschromatographie oder HPLC sind viel zu langsam, um kontinuierlich Analysedaten eines Prozesses zu Steuerungszwecken auszuwerten. Der Verlauf der UV/VIS-Absorptionsspektren, d. h. die Änderung der Absorption im Verlauf eines Herstellungs- oder auch Färbeprozesses vermittelt direkte Informationen, die die Umsetzung charakterisieren, d. h. die Zu- oder Abnahme von Komponenten erkennen läßt. Allein mit dem Auge erkennt der Fachmann oft schon den Grad einer Umsetzung oder den Badauszug einer Färbung, jedoch läßt sich dieser Eindruck nicht genau quantifizieren. Es ist zweifelsfrei möglich, einen Prozeß, wie z. B. die Herstellung eines Farbstoffs, durch UV/VIS-spektroskopische Methoden zu beobachten und durch Zugabe der Reaktanden das UV/VIS-Spektrum der gewünschten Endform anzunähern. Die EP 395 587 beschreibt beispielsweise ein Verfahren, bei dem das UV/VIS-Spektrum des Zielproduktes ständig (z. B. alle 30 Minuten) mit der Hüllkurve (Summe der UV/VIS-Spektren] der Reaktionsmasse verglichen wird. Hierbei wird nun eine Differenz zwischen diesen Spektren bei diskreten Eich-Wellenlängen gebildet und portionsweise von den Reaktanden zugesetzt, bis die Kurven sich gleichen. Dieses Verfahren wurde nach der angewandten mathematischen Vorgehensweise "Differenzanalyse" genannt. Absolute Einsatzmengen und Einsatzverhältnisse sind auf diese Weise nicht meßbar, man geht vielmehr davon aus, daß nur das Umsetzungsprodukt ein identisches Spektrum oder eine identische Hüllkurve besitzt. Aus der Vorgehensweise wird sofort deutlich, daß dieses Verfahren nur für eine analoge Steuerung geeignet ist, man erhält nur die Angabe, daß z. B. von einer Substanz mehr zugesetzt werden muß, aber nicht wieviel. Für eine Auswertung von Färbungen, z. B. in einer automatischen Laborfärbeanlage, ist diese Vorgehensweise ungeeignet, denn sie ergibt keine Einzelfarbstoffkonzentrationen.

Es bestand somit ein großer Bedarf, ein Verfahren zu entwickeln, das es erlaubt eine genaue Angabe der zu analysierenden Substanz oder Substanzgemische in absoluten Konzentrationen wie g/kg oder in relativen Prozentangaben zu erhalten und zu jedem Zeitpunkt der Synthese oder des Färbevorgangs den aktuellen Gehalt der jeweiligen Substanz zu bestimmen.

Diese Aufgabe wird gelöst durch ein Verfahren zur Steuerung und Optimierung chemisch industrieller Prozesse für die Herstellung von Farbstoffen, anderweitig farbiger Substanzen sowie deren Zwischenprodukte oder von Färbungen mit einem oder mehreren Farbstoffen, indem man mit der Multikomponentenanalyse der UV/VIS-Spektren, gegebenenfalls nach vorheriger Aufbereitung der Proben, die genauen Mengen der an der Umsetzung oder Färbung beteiligten Substanzen ermittelt und gegebenenfalls steuert und optimiert.

Das Verfahren basiert auf der Aufzeichnung von UV/VIS-Spektren mit Hilfe eines Photodioden-Spektrometers oder eines schnellscannenden Gitterspektrometers und der anschließenden Multikomponenten-Analyse. Diese liefert, nach Eichung mit den reinen Substanzen der Edukte und/oder Produkte oder auch Einzelfarbstoffen oder Mischungen aus Färbelösungen nach mathematischer Zerlegung in die Einzelkomponenten eine genaue Angabe der zu analysierenden Substanzen oder Substanzgemische in absoluten Mengen wie z. B. g/kg oder in relativen Prozentangaben. Zu jedem Zeitpunkt kann somit über den Monitor der aktuelle Gehalt der jeweiligen Substanz abgelesen werden. In idealer Weise wird zur graphischen Darstellung der sich zeitlich ändernden Zusammensetzung der Lösung ein Punktediagramm gewählt, in dem jeder analysierten Substanz eine farbige Punktereihe zugeordnet wird. Wählt man den Meßzyklus gegenüber der Gesamtanalysedauer sehr kurz, so erhält man Kurvendiagramme, die den Verlauf der Reaktion nach der Konzentration der Reaktanden beschreibt. Üblicherweise liegt der Meßzyklus im Bereich von 20 Sekunden und ist je nach Problem über einen weiten Zeitraum von 5 Sekunden bis zu Stunden stufenlos einstellbar. Es wurde gefunden, daß die weithin verbreitete Ansicht, daß nur Substanzen mit deutlich unterschiedlichen Absorptionsmaxima auf diese Weise erfaßbar seien, nicht Allgemeingültigkeit besitzt. Die Kurven müssen sich für die Multikomponentenanalyse nur an irgendeinem Abschnitt signifikant unterscheiden, was auch bei Farbstoffen durchaus nur im VIS-Bereich vorkommen kann. Ferner können durch eine Auflösungserhöhung des Meßgerätes z. B. auf 0,1 nm Meßpunktabstand auch kleinste Schultern erfaßt werden, die zur genauen Abgrenzung der Farbstoffe untereinander dienen.

Es hat sich bewährt, vor Meßbeginn Eichreihen der zu bestimmenden Substanzen, z. B. der Farbstoffe, zu vermessen. Die Eichmessungen können nun sowohl Einzelkomponenten, als auch Mischungen mehrerer Komponenten enthalten. Die genauen Konzentrationen werden in das Computerprogramm eingegeben, getrennt nach Substanz. Der Konzentrationsbereich der Eichlösungen sollte den Meßbereich beinhalten. Aus diesen Angaben wird eine Kalibriermatrix errechnet, die zur späteren Bestimmung der Komponenten erforderlich ist. Unter Multikomponenten-Analyse versteht man die quantitative Analytik von Mehrstoffgemischen, die sich folgender mathematischer Algorithmen bedient: Partial Least Squares Type 1 (PLS-1), Partial Least Squares Type 2 (PLS-2) - Methoden der kleinsten Fehlerquadrate, Principle Component Regression analysis (PCR), sowie Classic Least Squares (CLS) oder Inverse Least Squares (ILS). Die Methode der kleinsten Fehlerquadrate (PLS) sowie die Hauptkomponenten-Regression (PCR) werden z. B. in Anal. Chem. 1988, 60, 1193, Anal. Chem. 1988, 60, 1202 und Anal. Chem. 1990, 62, 1091 von D. Haaland und E. V. Thomas, sowie in: A. Tutorial, Laboratory for Chemometrics and Center for Process Analytical Chemistry, Dept. of Chemistry, University of Washington, Seattle, WA 98195 von P. Geladi und B. Kowalewski beschrieben. Das Ziel dieser rechnerischen Ansätze ist, mathematische Gleichungen zu erhalten, durch die der Gehalt der unbekannten Mischungen bestimmt werden kann. Das Prinzip des PLS-Algorithmus ist es, die Spektren in eine Reihe mathematischer Spektren zu zerlegen, die als Faktoren beschrieben werden. Eine detaillierte Beschreibung der Vorgehensweise ist aus der angegebenen Literatur erhältlich.

Bei den Farbstoffen, deren Synthese und Verarbeitung mittels der hier beschriebenen Methode überwacht und gesteuert wird, handelt es sich zum Beispiel um Textilfarbstoffe, die den verschiedensten chemischen Klassen angehören können. Es handelt sich beispielsweise um anionische Farbstoffe, wie Nitro-, Aminoketon-, Ketonimin-, Methin-, Nitrodiphenylamin, Chinolin-, Aminonaphthochinon- oder Cumarinfarbstoffe oder auch saure Farbstoffe auf Basis von Gelbholzextrakt, insbesondere saure Anthrachinon- und Azofarbstoffe, wie Monoazo-, Disazo- und Polyazofarbstoffe. Ferner kommen basische, d. h. kationische Farbstoffe in Frage. Es handelt sich hier beispielsweise um die Halogenide, Sulfate, Methosulfate oder Metallhalogenid-Salze, z. B. Tetrachlorzinkate, von Azofarbstoffen, wie Monoazo-, Disazo- und Polyazofarbstoffen, von Anthrachinonfarbstoffen, Phthalocyaninfarbstoffen, Diphenylmethan- und Triarylmethanfarbstoffen, Methin-, Polymethin- und Azomethinfarbstoffen, von Thiazol-, Ketonimin-, Acridin-, Cyanin-, Nitro-, Chinolin-, Benzimidazol-, Xanthen-, Azin-, Oxazin- und Thiazinfarbstoffen.

Unter dem Begriff Farbstoffe sollen im vorliegenden Fall auch optische Aufheller verstanden werden, z. B. Stilbenaufheller, vor allem solche vom Typ der Bis-triazinylaminostilben-disulfonsäuren, der Bis-styrylbiphenyle und -benzole und der Bis-triazolylstilben-disulfonsäuren.

Es versteht sich von selbst, daß je nach Aufgabenstellung im Zuge der Farbstoffsynthese neben den eigentlichen Farbstoffen oder Aufhellern nach dem erfindungsgemäßen Verfahren auch Vor- und Nebenprodukte erfaßt werden. Gerade die während der Reaktion gebildeten Nebenprodukte sind von großer Bedeutung, nicht nur hinsichtlich der Ausbeute, sondern auch was den Farbton und die Eigenfarbe des entsprechenden Farbstoffs/Aufhellers anbetrifft.

Grundsätzlich ist das Verfahren von großer Anwendungsbreite und läßt sich in der Farbstoffherstellung zur Steuerung und Regelung der Farbstoffsynthese, zur Steuerung und Regelung von Edukt- und Produktflüssen, zur Analyse und zur Qualitätskontrolle einsetzen.

Als chemische Umsetzungen, die gemäß der vorliegenden Erfindung mittels UV/VIS-Spektroskopie gesteuert und optimiert werden können, kommen z. B. Diazotierungen, Kupplungsreaktionen, Komplexierungen, Kondensationsreaktionen, Reduktionsreaktionen und Oxydationsreaktionen in Betracht.

Die erfindungsgemäße Verfahrensweise eignet sich auch in idealer Weise, Farbflotten online zu analysieren und den Badauszug graphisch darzustellen. Bei Färbungen von vorbehandelter Baumwolle oder Polyamid-haltiger Mischgewebe geht man beispielsweise folgendermaßen vor: Eine wäßrige Farbstoffflotte mit z. B. drei Reaktivfarbstoffen wird in einem Laborfärbeapparat (z. B. Datacolor Turbomat) vorgelegt und anschließend das Textil eingebracht. Die Flotte wird bei Raumtemperatur kontinuierlich umgewälzt, um eine gleichmäßige Färbung zu erzielen. Über einen Ablauf und einen Zulauf wird die Flotte durch dünne Gummi- oder Teflonschläuche durch eine Durchflußküvette gepumpt. Der Küvettendurchmesser kann auch bis zu 0,01 cm klein sein, um z. B. hochkonzentrierte Flotten messen zu können. Die Küvette befindet sich in einem UV/VIS-Spektrometer, das entweder ein Diodenzeilen-Spektrometer ist, oder ein schnellscannendes Gitter-Spektrometer. In diesem Spezialfall handelt es sich um eine neutrale Farbstoffflotte, die direkt spektroskopisch vermessen werden kann. Alternativ kann bei Farbstoffmischungen, die direkt, ohne aufbereitenden Zwischenschritt analysierbar sind, die ATR-Meßtechnik (attenuated total reflection) eingesetzt werden. Bei dieser Technik wird ein Quarz- oder Alkalimetallglasstab oder eine hierfür geeignete lichttransportierende Vorrichtung in die zu messende Lösung getaucht und an der Grenzfläche zwischen Kristall und Flüssigkeit gemessen. Die hierfür üblicherweise eingesetzten Proben haben eine Konzentration von 5 bis 150 g/l Farbstoff. Die ATR-Sonde ist über einen Glasfaserlichtleiter mit dem Spektrometer verbunden. Die Länge des Lichtleiters kann bei Messungen im VIS-Bereich bis zu 1000 m betragen, wodurch das Spektrometer zentral in einer Meßwarte untergebracht werden kann. Bei explosionsgeschützten Betrieben muß so keine weitere Vorsorge getroffen werden.

Bei Beginn des Färbeprogramms wird auch die kontinuierliche Messung am Spektrometer gestartet. Das Computerprogramm startet eine Messung am Spektrometer und verarbeitet das aufgezeichnete Spektrum mit Hilfe der Multikomponenten-Analyse. Die hieraus ermittelten Konzentrationen werden in Prozent Ausgangsmenge umgerechnet und graphisch am Bildschirm angezeigt.

Bei einer Trichromie kann man nun z. B. ermitteln, welche Farbstoffe zueinander passen und wie die Baderschöpfung ist. Färberelevante Einflüsse, die die Zugabe von Zusatzstoffen wie z. B. Salz und/oder Alkali oder auch Temperaturänderungen betreffen, werden so schnell und zweifelsfrei erkannt. Die verbrauchte Flotte kann anschließend mit der notwendigen Menge an Wasser und Farbstoff wieder aufkonzentriert werden. Die Aufkonzentration wird ebenso mit der Multikomponenten-Analyse überwacht.

Analog dieser Verfahrensweise kann man auch herkömmliche Trichromiefärbungen mit Salz und Alkali auf diese Weise überwachen. Hierfür bieten sich zwei gangbare Wege an: a.) alle Eichlösungen werden alkalisch gestellt und Salz zugesetzt, genau wie bei einer Färbung und b.) es werden kontinuierlich kleine Proben entnommen, die mit Pufferlösung neutralisiert werden, wie idealerweise auch mit den Eichlösungen verfahren wurde. Generell ist es natürlich sehr wichtig, daß die Eichungen bei denselben Bedingungen vorgenommen werden wie die spätere Messung, denn die Farbstoffe reagieren oftmals bei höheren pH-Werten, d. h. sie bilden z. B. Phenolate oder Naphtholate, die eine andere Absorption und Extinktion haben. Entscheidet man sich für die in Abbildung 10 dargestellte Variante b.), so wird aus der in der Färbemaschine (3) befindlichen Reaktions- und Färbelösung z. B. eine 0,5 ml Probe entnommen, indem man die Reaktionslösung mit einer Pumpe (1) durch einen dünnen Teflon- oder Gummischlauch im Kreis pumpt und ein darin befindliches Ventil (2) für eine, 0,5 ml Durchfluß entsprechende, Zeitdauer öffnet. Die auf diese Weise entnommene Probe wird mit z. B. 19,5 ml einer pH 7 Pufferlösung aus dem Puffervorratsgefäß (8) mit einer Pumpe (1) abgestoppt, verdünnt und mit einer Pumpe (1) durch eine Durchflußküvette des UV/Vis-Spektrometers (5) und schließlich in das Abfallgefäß (9) gepumpt. Die Mischung der Probe und der Pufferlösung wird in oder durch einen Autosampler (4) vorgenommen, der dem UV/VIS-Meßgerät (5) ein Startsignal übermittelt. Die Zeitsteuerung wird in diesem Fall von dem langsameren Aufbereitungsschritt getriggert (siehe Abb. 10). Durch ein pH-Wert- und Temperatur-Meßgerät (6) kann außerdem eine Abhängigkeit des Prozesses (Färbung oder Reaktion) von diesen Parametern erkannt werden. Durch ein geeignetes Programm des Computers (7) kann z. B. eine Pumpe durch Zupumpen von Lauge den pH-Wert während der Färbung oder Reaktion kontinuierlich anheben. Dies entspricht einem Automet-Verfahren (siehe: ^{®}Remazol Automet) bei Färbungen, das jedoch nicht nur nach einem voreingestellten Algorithmus abläuft, sondern auch von dem Ausziehgrad der Farbstoffe gesteuert werden kann.

Anstelle dieses relativ aufwendigen, aber einfach zu steuernden Mechanismus kann auch eine Probenbereitung im Sinne der Flow-injection-Analyse erfolgen. Die "Trägerflüssigkeit" muß in diesem Fall die Pufferlösung sein. Eine Messung erfolgt zweckmäßigerweise im Backtailing der Probe.

Die beschriebene Verfahrensweise ist bei Trichromiefärbungen besonders zeitsparend, da in einem Arbeitsgang bereits die Kombinierbarkeit der Farbstoffe geprüft werden kann. Wenn nur einer der Farbstoffe durch einen anderen Farbstoff ausgetauscht wird, kann das Färbeverhalten auch der übrigen Farbstoffe dadurch beeinflußt werden. Es wurden z. B. schon Blockiereffekte bei Mehrfachanker-Farbstoffen festgestellt, die zu unerwartet schlechtem Färbeverhalten in Kombination führten.

Diese Beispiele zeigen sehr deutlich, daß eine Multikomponentenanalyse in Verbindung mit schnellscannenden Spektralphotometern und eventueller automatischer Probenaufbereitung eine große Hilfe bei der Zusammenstellung geeigneter Trichromien ist.

Da es sich bei allen Beispielen um Mischungen handelt, ist auch verständlich, daß dieselbe Apparatur auch zur Prozeßkontrolle einer chemischen Synthese dienen kann. Mit der gleichen Meßapparatur kann z. B. eine Farbstoffkupplung oder eine Umsetzung zu einem andersfarbigen Produkt beobachtet werden. Hierunter fallen Diazotierungs-, Kupplungs-, Kondensations-, Reduktions- und Oxidationsreaktionen, sowie Komplexierungen. Man eicht in diesen Fällen mit mehreren Konzentrationen an Edukt und Produkt. Zweckmäßigerweise entnimmt man der Reaktionslösung zu unterschiedlichen Zeitpunkten Proben und analysiert diese durch geeignete Chromatographiermethoden wie z. B. HPLC oder Gaschromatographie. Die auf diesem Weg bestimmten Probenmischungen können nun als Eichlösung zur Berechnung der Kalibrationsmatrix dienen.

Der Geräteaufbau und die Verbindung und Schaltung der Komponenten verdeutlicht den Ablauf (Darstellung in Abbildung 10).

### Beispiel 1

Als Beispiel für eine Trichromie auf vorbehandelter Baumwolle (siehe europäische Patentanmeldungsveröffentlichung EP 0 546 476 A1) soll die folgende Messung dienen. Als Farbstoffe werden Gelb (aus EP-A-73 481, Beispiel 1), Schwarz (C.I. Reactive Black 5) sowie Rot (aus DE 274 8965, Beispiel 1) verwendet. Die Färbung wird analog dem vorher beschriebenen Vorgehen in einem ^{TM}Ahiba Turbomat durchgeführt. Die Messung wird ohne Textil gestartet, dann wird das Textil hinzugegeben und nach ca. 1 Minute das Temperaturprogramm gestartet. Die Färbung dauert 60 Minuten, die Temperatur wird von etwa 28°C in 15 Minuten auf 80°C erhöht.

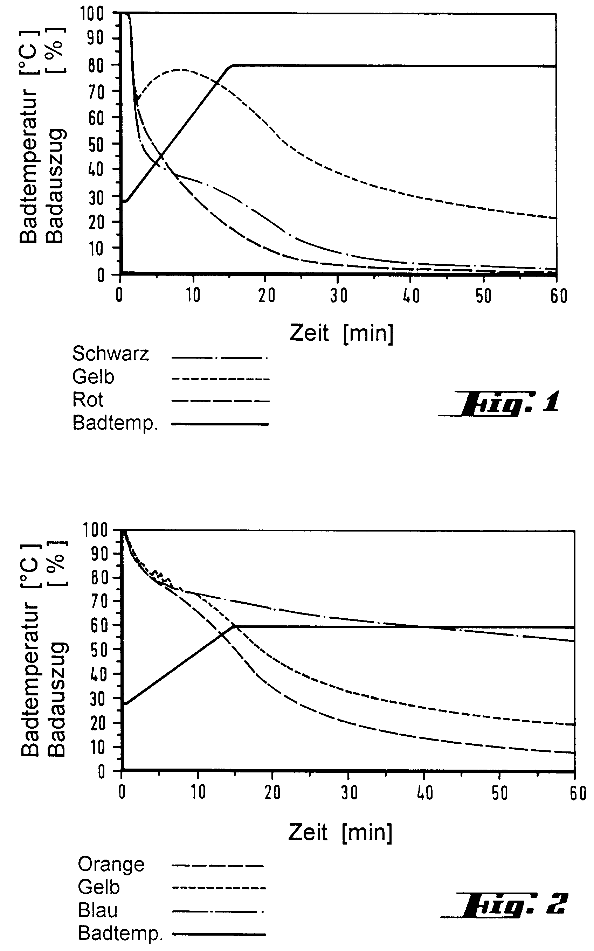

Der erhaltene Kurvenverlauf (% des Badauszugs über der Zeit) ist in Abbildung 1 dargestellt. In diesem Fall kann man sehr deutlich den guten Badauszug der schwarzen und roten Komponenten erkennen. Auf dieser Ware zeigt das Gelb jedoch ein schlechteres Färbeprofil.

Als Textilmaterial dient vorbehandeltes Baumwoll-Trikot. Das Flottenverhältnis ist 1:10.

Handelt es sich nun um eine aktuelle Trichromie, so kann man aus diesen Kurven schließen, daß der rote Farbstoff und der blauschwarze Farbstoff sehr gut harmonieren, der gelbe Farbstoff allerdings durch einen anderen Farbstoff ausgetauscht werden sollte. Diese Erkenntnisse gelten nur für dieses Beispiel.

Der Einsatz nur einer neuen Komponente kann auch das Verhalten der übrigen beeinflussen.

### Beispiel 2

Ein Beispiel einer anderen Trichromie ist die Kombination von (C.I. Reactive Yellow 37) Gelb, Blau (aus EP-A-28788, Beispiel 2) und Orange (aus EP 61151, Beispiel 4). Die folgenden zwei Diagramme zeigen den Verlauf dieser Färbungen und die Temperaturabhängigkeit der Färbungen bei 60°C und 80°C. Die erhaltenen Diagramme verdeutlichen außerdem, daß die in diesem Fall verwendeten Farbstoffe keine ideale Kombination auf vorbehandelter Baumwolle darstellen. Als Textilmaterial dient vorbehandeltes Baumwoll-Trikot. Das Flottenverhältnis ist 1:10.

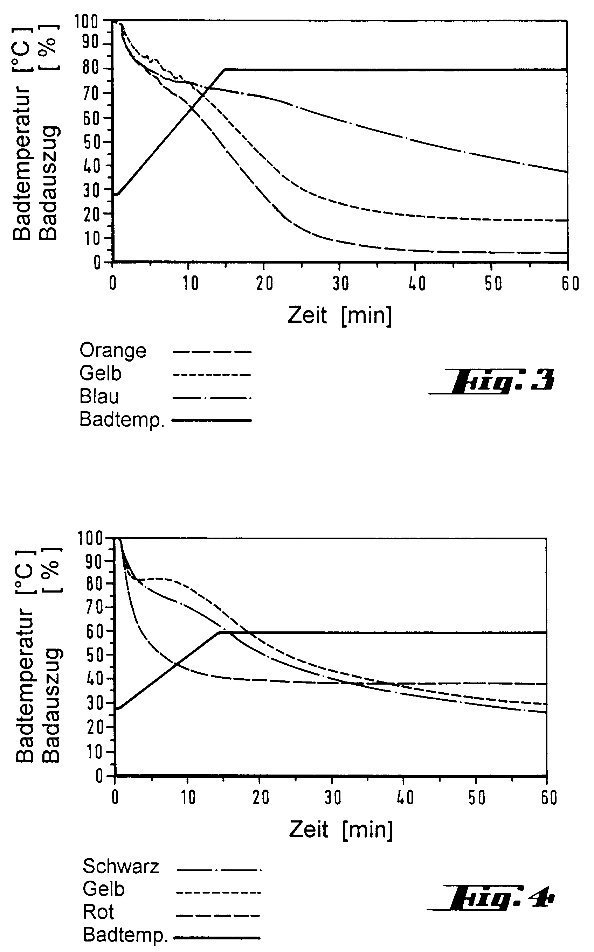

Der erhaltene Kurvenverlauf (% des Badauszugs über der Zeit) ist in Abbildung 2 (60°C) und 3 (80°C) dargestellt.

### Beispiel 3

Ein Beispiel einer Trichromie für tiefe Farbtöne ist die Kombination von Gelb (aus EP-A-73481, Beispiel 1), Schwarz (C.I. Reactive Black 5) und Rot (EP 32187, Beispiel 1). Die folgenden zwei Diagramme zeigen den Verlauf dieser Färbungen und die Temperaturabhängigkeit der Färbungen bei 60°C und 80°C.

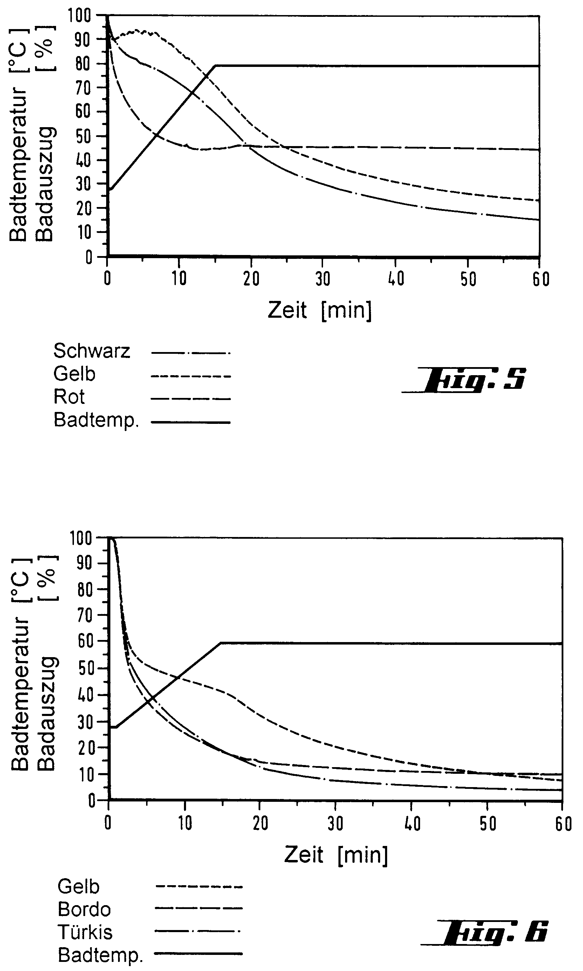

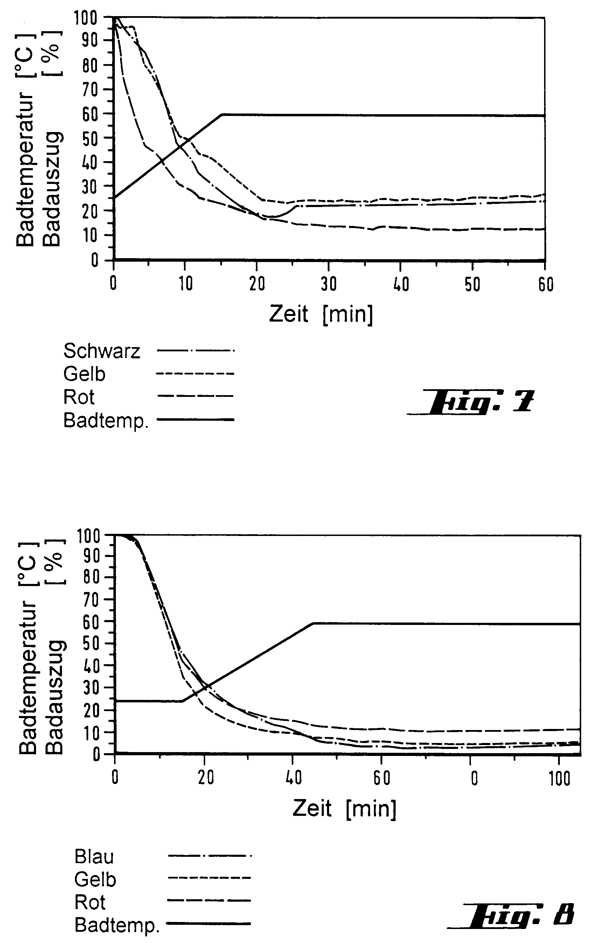

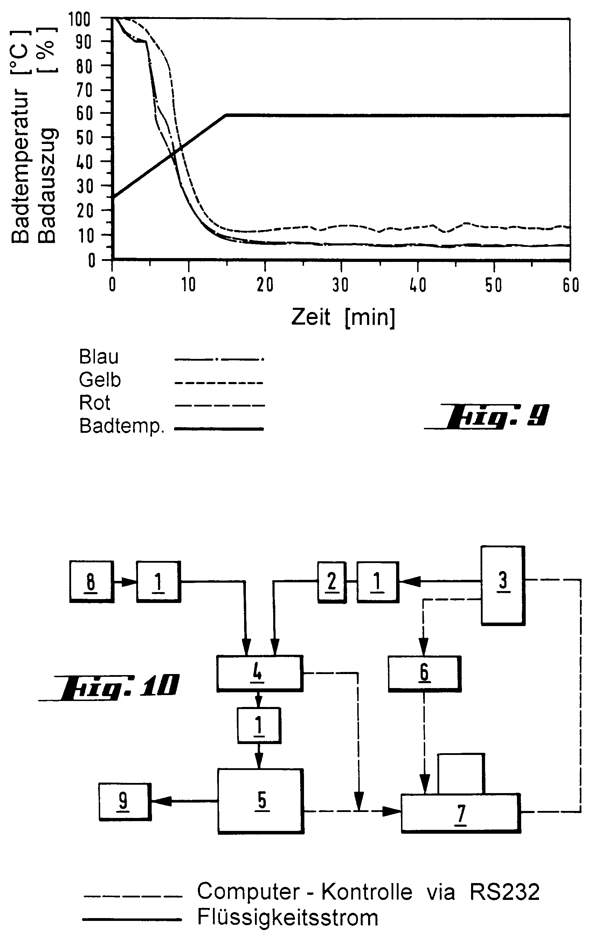

Der erhaltene Kurvenverlauf (% des Badauszugs über der Zeit) ist in Abbildung 4 und 5 dargestellt.

Als Textilmaterial dient vorbehandeltes Baumwoll-Trikot. Das Flottenverhältnis ist 1:10.

### Beispiel 4

Ein Beispiel einer Trichromie für besonders echte Färbungen mit hervorragendem Ausziehprofil ist die Kombination von Gelb (aus EP 158233, Beispiel 1), Türkisblau (DE-OS 1179317, Beispiel 2) und Bordo (C.I. Red 49). Als Textilmaterial dient vorbehandeltes Baumwoll-Trikot. Das Flottenverhältnis ist 1:10.

Der erhaltene Kurvenverlauf (% des Badauszugs über der Zeit) ist in Abbildung 6 dargestellt.

### Beispiel 5

Als Beispiel einer herkömmlichen Trichromie mit Salz und Alkali dient das folgende Beispiel von Gelb (aus EP-A-73481, Beispiel 1), Schwarz (C.I. Reactive Black 5) und Rot (aus EP 32187, Beispiel 1). Es wird hier nach einer reinen Sodavariante (20 g/l Na₂CO₃) gefärbt. Es werden automatisch im 1,5 Minuten-Takt Proben entnommen, gepuffert, spektralphotometrisch vermessen und berechnet.

Der erhaltene Kurvenverlauf (% des Badauszugs über der Zeit) ist in Abbildung 7 dargestellt.

Das Flottenverhältnis beträgt 1:10 und die Färbetemperatur 60°C.

### Beispiel 6

Als Beispiel einer herkömmlichen Trichromie mit Salz und Alkali dient das folgende Beispiel von Gelb (aus EP 56975, Beispiel 3), Blau (aus EP-A-28788, Beispiel 2) und Rot (aus EP 32187, Beispiel 1). Es wird hier mit 5 g/l Soda und 2 ml/l Natronlauge gefärbt. Es werden automatisch im 1,5 Minuten-Takt Proben entnommen, gepuffert, spektralphotometrisch vermessen und berechnet.

Das Flottenverhältnis beträgt 1:10 und die Färbetemperatur 60°C. In diesem Beispiel ist ein deutlich besseres Färbeverhalten der Mischung zu beobachten.

Der erhaltene Kurvenverlauf (% des Badauszugs über der Zeit) ist in Abbildung 8 dargestellt.

### Beispiel 7

Als Beispiel einer weiteren herkömmlichen Trichromie mit Salz und Alkali dient das folgende Beispiel von Gelb (C.I. Orange 91), Blau (C.I. Blau 182) und Rot (aus EP 122 881, Beispiel 1). Es wird hier mit 5 g/l Soda und 2 ml/l Natronlauge gefärbt. Im 1,5 Minuten-Takt werden Proben automatisch entnommen, gepuffert, spektralphotometrisch vermessen und berechnet.

Der erhaltene Kurvenverlauf (% des Badauszugs über der Zeit) ist in Abbildung 9 dargestellt.

Das Flottenverhältnis beträgt 1:10 und die Färbetemperatur 60°C.

### Beispiel 8

Mit dem beschriebenen Verfahren lassen sich alternativ auch Druckpasten bestimmen. Da die Druckpasten nicht pipetier- oder pump- und saugbar sind, muß eine bestimme Menge Druckpaste (100 g) eingewogen werden und auf ein bestimmtes Volumen (100 ml) mit Wasser verdünnt werden. Auf diese Weise erhält man Lösungen, die in einer Küvette im Spektrometer vermessen werden können. Das System muß vor der Bestimmung auf die beschriebene Art und Weise kalibriert worden sein, dann können die Farbstoffgehalte unbekannter Zusammensetzungen bestimmt werden.

### Beispiel 9

Bei Verwendung einer ATR-Sonde braucht die Druckpaste nicht verdünnt zu werden, da eine ATR-Sonde direkt in die Paste eingetaucht werden kann. Die ATR-Sonde ersetzt die Küvette, da in der Grenzschicht um den Quarzstab der ATR-Sonde in einer nm-dünnen Schicht gemessen wird. Der weitere Verfahrensablauf ist wie in Beispiel 1 beschrieben. Für die Messung muß zuerst mit einigen bekannten Proben kalibriert werden. Nachdem die Kalibriermatrix erstellt wurde, können unbekannte Proben bestimmt werden. Auf diese Weise läßt sich sehr schnell die Druckpaste kontrollieren und eventuelle Einwaagefehler lassen sich somit rechtzeitig feststellen und korrigieren.

## Patentansprüche

1. Verfahren zur Steuerung und Optimierung von Prozessen zur Herstellung von Farbstoffen, anderweitig farbiger Substanzen sowie deren Zwischenprodukten oder von Färbungen mit einem oder mehreren Farbstoffen, dadurch gekennzeichnet, daß man mit einer Multikomponentenanalyse der UV/VIS-Spektren, gegebenenfalls nach vorheriger Aufbereitung der Proben, die genauen Mengen der an der Herstellung oder Färbung beteiligten Substanzen ermittelt und gegebenenfalls steuert und optimiert.

2. Verfahren gemäß Anspruch 1, dadurch gekennzeichnet, daß man die UV/VIS-Spektren der beteiligten Substanzen in mehreren Konzentrationen zur Eichung verwendet und den Konzentrationsverlauf mindestens einer farbigen Substanz online protokolliert, steuert oder optimiert.

3. Verfahren gemäß Anspruch 1 oder 2, dadurch gekennzeichnet, daß man Färbeverfahren mit Mono- oder Polyazo-, Metallkomplexazo-, Anthrachinon-, Phthalocyanin-, Formazan-, Azomethin-, Nitroaryl-, Dioxazin-, Phenazin- oder Stilbenfarbstoffen steuert und optimiert.

4. Verfahren gemäß Anspruch 1 oder 2, dadurch gekennzeichnet, daß man Herstellungsverfahren für Mono- oder Polyazo-, Metallkomplexazo-, Anthrachinon-, Phthalocyanin-, Formazan-, Azomethin-, Nitroaryl-, Dioxazin-, Phenazin- oder Stilbenfarbstoffe steuert und optimiert.

5. Verfahren gemäß Anspruch 1 oder 2, dadurch gekennzeichnet, daß man Diazotierungen, Kupplungsreaktionen, Komplexierungen, Kondensationsreaktionen, Reduktionsreaktionen und Oxydationsreaktionen steuert und optimiert.

6. Verfahren gemäß mindestens einem der Ansprüche 1 bis 5, dadurch gekennzeichnet, daß man die Methode der UV-VIS-Spektroskopie zur online Steuerung und Optimierung verwendet.

7. Verfahren gemäß mindestens einem der Ansprüche 1 bis 6, dadurch gekennzeichnet, daß mit der Multikomponentenanalyse direkt der Prozentsatz oder die Absolutmenge der meßbaren Substanz ermittelt wird.

8. Verfahren gemäß mindestens einem der Ansprüche 1 bis 7, dadurch gekennzeichnet, daß die spektrophotometrisch zu analysierende Probe entweder dem Reaktionsmedium entnommen wird und man gegebenenfalls eine Probenaufbereitung anschließt, oder die Messung im Reaktionsmedium mit Hilfe eines optischen Sensors vorgenommen wird.

9. Verfahren gemäß mindestens einem der Ansprüche 1 bis 3 und 6 bis 8, dadurch gekennzeichnet, daß Ein- oder Mehrkomponentenfärbungen mit oder ohne Alkalizusätze gesteuert und/oder optimiert werden können.

10. Verfahren gemäß mindestens einem der Ansprüche 1 bis 7, dadurch gekennzeichnet, daß eine ATR-Sonde zum Einsatz kommen kann.

11. Verfahren gemäß mindestens einem der Ansprüche 1 bis 10, dadurch gekennzeichnet, daß die zu analysierende Probe und das UV/VIS-Meßgerät über Lichtleiter miteinander verbunden sind.

12. Verfahren gemäß mindestens einem der Ansprüche 1 bis 11, dadurch gekennzeichnet, daß als UV/VIS-Meßgerät ein Photodioden-Spektrometer oder ein schnellscannendes Gitterspektrometer verwendet wird.

13. Verfahren gemäß mindestens einem der Ansprüche 1 bis 12, dadurch gekennzeichnet, daß die Probe entnommen wird, indem man die Reaktionslösung durch einen Schlauch im Kreis pumpt, ein im Schlauch befindliches Ventil für eine dem Probenvolumen entsprechende Zeitdauer öffnet und die entnommene Probe, gegebenenfalls nach Aufbereitung, durch eine Durchflußküvette pumpt.
